# EUROPEAN PATENT SPECIFICATION

(11) **EP 4 094 744 B1**
(45) Date of publication and mention of the grant of the patent: **26.11.2025**
(21) Application number: 21920149.8
(22) Date of filing: 07.07.2021
(51) Int. Cl.: B06B 1/16, H02K 7/06, A61H 23/02, H02K 7/00, A61H 1/00

(54) **VIBRATION MOTOR, RHYTHM DEVICE, RHYTHM MATTRESS, RHYTHM SOFA, AND RHYTHM RECLINER**
VIBRATIONSMOTOR, RHYTHMUSVORRICHTUNG, RHYTHMUSMATRATZE, RHYTHMUSSOFA UND RHYTHMUSNEIGUNGSVERSTELLER
MOTEUR À VIBRATIONS, DISPOSITIF BERCEUR, MATELAS BERCEUR, CANAPÉ BERCEUR ET FAUTEUIL INCLINABLE BERCEUR

(30) Priority: 02.04.2021 CN 202120686972 U; 04.06.2021 CN 202121254881 U
(43) Date of publication of application: 30.11.2022
(73) Proprietor: Wang, Xiaobing, Hefei, Anhui 230001 (CN)
(72) Inventor: WANG, Jicheng, Hefei Anhui 230001 (CN); WANG, Fuchang, Hefei Anhui 230001 (CN); WANG, Xiaobing, Anhui 230001 (CN)
(74) Representative: Vesterinen, Jussi Tapio
(86) International application number: PCT/CN2021/104947
(87) International publication number: WO 2022/205660

(56) References cited:
- CN-A- 105 877 987
- CN-A- 107 536 354
- CN-A- 111 265 054
- CN-U- 205 696 817
- CN-U- 210 078 267
- CN-U- 211 095 912
- CN-Y- 2 371 969
- GB-A- 2 528 967
- JP-A- H08 196 054
- JP-A- H1 023 490
- US-A1- 2011 266 901
- US-A1- 2013 281 892
- US-A1- 2013 283 941
- US-A1- 2020 022 868
- US-B2- 10 449 112
- US-B2- 7 528 702
- US-B2- 7 798 029

## Description

### TECHNICAL FIELD

The present disclosure relates to the technical field of rhythmic devices, in particular to a vibration motor, a rhythmic device, a rhythmic mattress, a rhythmic sofa and a rhythmic deck chair.

### BACKGROUND ART

With the rapid development of society, people pay more and more attention to the importance of health, and have made many health products to improve sub-health. At present, some products such as mattresses, sofas or massage chairs are internally provided with a rhythm device. The rhythm device comprises a vibration motor. Vibration is generated through the vibration motor so as to have a vibration function and play a role in massaging people lying on the products. However, most of the vibration motors used in the current market are driven by pulleys and belts, and the rotating shaft and the eccentric block are coaxially provided with the motor by driving the pulleys to transmit vibration. On the one hand, the transmission loss is large, and after long-term use, the belt is easy to slip due to relaxation and the transmission stability is poor. On the other hand, the motor is coaxially provided with the rotating shaft and the eccentric block, resulting in poor vibration transmission effect, which leads to weak vibration and low stability of the vibration motor, so that the overall vibration stability and the vibration effect of the rhythm device need to be improved.

Therefore, how to improve the vibration stability of the vibration motor at least to a certain extent has become an urgent problem for those skilled in the art.

JP H08 196054A discloses a cylindrical micro oscillation motor with the purpose of ensuring a large oscillation even in a cylindrical micro oscillation motor having small outside diameter by forming a protrusion for preventing the bending of shaft at least at the outer circumferential part on the other end face side of an eccentric weight.

US20110266901A1 discloses a flat type vibration motor realizing strong fastening of a rotor frame and an eccentric weight without welding.

### SUMMARY

The purpose of the present disclosure is to provide a vibration motor, and a rhythm device, a rhythm mattress, a rhythm sofa and a rhythm deck chair comprising the vibration motor. The present disclosure is simple in structure, stable and efficient in transmission, the rotating shaft and the motor are coaxially provided and can stably transmit vibration, and the whole vibration of the vibration motor is regular and stable. Compared with the prior art, the vibration stability is improved to a certain extent, and the vibration intensity is guaranteed so as to provide effective massage, relieve human fatigue and effectively promote people to quickly enter deep sleep.

The present disclosure provides a rhythm device as recited in claim 1.

Preferably, each fin section is provided with two connected fins; the vibrating plate is provided as a fiberboard; and the motor is provided as a brushless motor.

Preferably, a connecting plate is provided on the outer wall of the housing, and the vibrating plate is attached and connected with the connecting plate; alternatively, a supporting leg is provided on the housing, the supporting leg comprises a connecting rod part and a foot pad part protruding in the radial direction of the connecting rod part, and the foot pad part and the vibrating plate are both provided with fixing holes and fixedly connected by bolts.

Preferably, the rhythm device further comprises a controller electrically connected with the motor, and a wireless communication module for communication and connection with a mobile terminal is provided on the controller.

The present disclosure further provides a rhythmic mattress as recited in claim 5.

Preferably, a waist massage area corresponding to the waist of the human body and a leg massage area corresponding to the lower leg of the human body are provided on the mattress body, and at least one of the rhythmic devices is provided in the waist massage area and the leg massage area, respectively.

The present disclosure further provides a rhythmic sofa as recited in claim 7.

The present disclosure further provides a rhythmic deck chair as recited in claim 8.

In the technical scheme provided by the present disclosure, the power output shaft of the motor is in transmission connection with the rotating shaft through a coupler, and the rotating shaft and the power output shaft are coaxially provided, so that the transmission is stable and efficient. At the same time, the eccentric block rotates with the rotating shaft to generate a centrifugal force, which causes the rotating shaft to generate vibration. On the one hand, the rotating shaft transmits vibration to the housing at the side through the bearing, and on the other hand, the rotating shaft conducts vibration to the motor through the coupler, so that the conduction loss is small. The motor generates synchronous strong vibration and transmits the vibration to the housing at the side, so that the whole housing generates synchronous strong vibration. The vibration is transmitted between the rotating shaft and the motor through the coupler. Compared with belt transmission, the present disclosure has high stability and small transmission loss. Compared with the prior art, the vibration motor can generate synchronous vibration as a whole with regular and stable vibration, and the vibration intensity is guaranteed so as to provide effective massage, relieve human fatigue and effectively promote people to quickly enter deep sleep. In the same way, the rhythm device, the rhythm mattress, the rhythm sofa and the rhythm deck chair comprising the vibration motor according to the present disclosure have the same beneficial effects.

### BRIEF DESCRIPTION OF THE DRAWINGS

In order to explain the embodiments of the utility model or the technical scheme in the prior art more clearly, the drawings needed in the embodiments or the description of the prior art will be briefly introduced hereinafter. Obviously, the drawings in the following description are only some embodiments of the utility model. For those skilled in the art, other drawings can be obtained according to these drawings without paying creative labor.
FIG. 1 is an exploded diagram of a vibration motor according to some embodiments of the present disclosure;
FIG. 2 is an exploded diagram of a vibration motor according to other embodiments of the present disclosure;
FIG. 3 is a schematic structural diagram of a rhythm device according to some embodiments of the present disclosure;
FIG. 4 is a schematic structural diagram of a vibrating plate according to some embodiments of the present disclosure;
FIG. 5 is a schematic structural diagram of a vibrating plate according to other embodiments of the present disclosure;
FIG. 6 is a schematic structural diagram of a rhythm device according to other embodiments of the present disclosure.

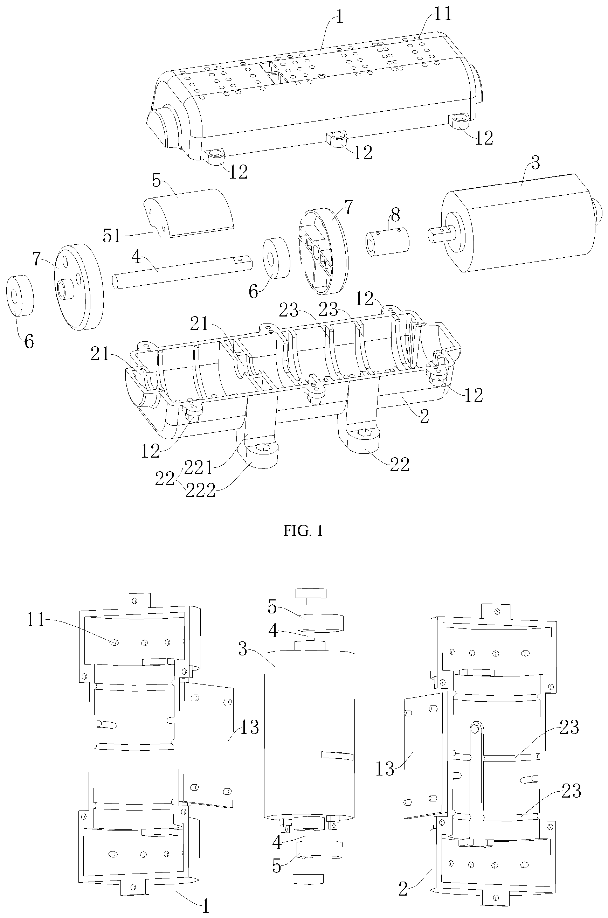

In FIG. 1- FIG. 6:
1. Upper housing; 2. Lower housing; 3. Motor; 4. Rotating shaft; 5. Eccentric block; 6. Bearing; 7. Fixed plate; 8. Coupler; 9. Vibration plate; 10. Housing; 11. Heat dissipation holes; 12. Snap-fit flanges; 13. Cover; 14. Connecting plate; 21. Bearing groove; 22. Supporting leg; 23. Supporting rib; 51. Fitting groove; 91. Fin; 92. U-shaped groove; 93. Connecting section; 221. Connecting rod; 222. Foot pad part

### DETAILED DESCRIPTION OF THE EMBODIMENTS

In order to make the purpose, technical scheme and advantages of the present disclosure clearer, the technical scheme of the present disclosure will be described in detail hereinafter. Obviously, the described embodiments are only some embodiments of the present disclosure, rather than all of the embodiments. Based on the embodiments of the present disclosure, all other embodiments obtained by those skilled in the art without paying creative labor belong to the scope of protection of the present disclosure.

The purpose of this embodiment is to provide a vibration motor, a rhythm device, a rhythm mattress, a rhythm sofa and a rhythm deck chair comprising the vibration motor. The present disclosure is simple in structure, stable and efficient in transmission, the rotating shaft and the motor can stably transmit vibration, and the whole vibration of the vibration motor is regular and stable. Compared with the prior art, the vibration and massage effects are improved to a certain extent, so that people can relieve fatigue, quickly enter deep sleep and improve sub-health of the human body.

Hereinafter, embodiments will be described in detail with reference to the accompanying drawings. In addition, the embodiments shown hereinafter do not play any role in limiting the content of the present disclosure described in the claims. In addition, the entire contents of the structures represented by the following embodiments are not limited to the solutions necessary for the present disclosures described in the claims.

With reference to FIGS. 1-6, this embodiment provides a vibration motor, comprising a housing 10, a motor 3 provided in the housing 10, a coupler 8 and a vibration assembly. The vibration assembly comprises a rotating shaft 4 and an eccentric block 5 connected with the rotating shaft 4. The eccentric block 5 is eccentrically provided relative to the central axis of the rotating shaft 4, that is, the central axis of the eccentric block 5 does not coincide with the central axis of the rotating shaft 4. The motor 3 is fixedly provided with the inner wall of the housing 10. A bearing 6 is fixed on the inner wall of the housing 10. The outer ring of the bearing 6 is fixedly connected with the inner wall of the housing 10, and the rotating shaft 4 penetrates into the bearing 6. The inner ring of the bearing 6 is rotatably connected with the rotating shaft 4. The rotating shaft 4 is connected with the housing 10 through the bearing 6. Meanwhile, the rotating shaft 4 is in transmission connection with the power output shaft of the motor 3 through the coupler 8, and the rotating shaft 4 and the power output shaft are coaxially provided, that is, the central axes of the rotating shaft 4 and the power output shaft coincide, so that the rotating shaft 4 and the motor 3 can be arranged in the length direction of the housing 10. As shown in FIG. 1, the housing 10 can be divided into two chambers, a rotating shaft chamber and a motor chamber in the length direction. The rotating shaft 4 is erected in the rotating shaft chamber through a bearing 6, and the motor 3 is connected in the motor chamber.

When the motor 3 starts, the power output shaft outputs torque, which is transmitted through the coupler 8. The rotating shaft 4 rotates, and the eccentric block 5 rotates synchronously therewith and generates a centrifugal force, so that the rotating shaft 4 generates vibration. On one hand, the rotating shaft 4 transmits vibration to the rotating shaft chamber through the bearing 6, and the housing 10 at the side generates vibration. On the other hand, the rotating shaft transmits vibration to the power output shaft and the motor 3 which are coaxially provided through the rigid coupler 8, so that the motor 3 generates synchronous vibration. The motor 3 transmits vibration to the motor chamber, and the housing 10 at the side also generates vibration, so that the whole housing 10 generates synchronous vibration, instead of one side having stronger vibration and the other side having weaker vibration. The whole vibration is regular and stable. Moreover, the coupler 8 is used for transmission, and the rotating shaft 4 and the power output shaft of the motor 3 are coaxially provided. Compared with the belt transmission and the parallel arrangement of the rotating shaft 4 and the power shaft in the prior art, the structure provided in this embodiment is more stable and efficient in transmission, has no phenomenon of transmission weakening or occasional interruption in long-term use, and can ensure the stable rotation of the rotating shaft 4, thereby ensuring the stable generation of vibration. From this point of view, the vibration intensity is guaranteed. On the other hand, when transmitting vibration, the coupler 8 can reduce the vibration loss compared with the belt, and the coaxial transmission is also superior to the parallel transmission that needs to be turned. The vibration transmission is more efficient, so that synchronous vibration is generated at the two sides of the housing 10, and there is no big difference in strength. From this point of view, the vibration intensity output by the vibration motor provided in this embodiment through the housing 10 is higher, more stable, more uniform and regular. Combined with the discussion from two aspects, on the whole, the whole housing 10 of the vibration motor provided in this embodiment can generate synchronous vibration, output stable, regular and guaranteed vibration, improve stability and vibration effect, provide effective massage, relieve fatigue of human body, improve sub-health of human body or promote people to quickly enter deep sleep, and really play a role of benefiting health. On the other hand, the vibration motor provided in this embodiment is simpler in structure and easier to produce.

Further, there may be two vibration assemblies. The two vibration assemblies may be provided at both ends of the motor 3, respectively, and are symmetrically provided with the motor 3 as the center. The housing 10 is provided with two rotating shaft chambers, and the motor chamber is located between the two rotating shaft chambers. The motor 3 is provided with a transmission shaft coaxially provided with the power output shaft. The transmission shaft is connected with the power output shaft through gear transmission, and the transmission shaft is provided in the length direction of the motor 3. Both ends of the transmission shaft are connected with two vibration assemblies in one-to-one correspondence, which are all connected with corresponding rotating shafts 4 through couplers 8. The same power output shaft drives two vibration assemblies to vibrate synchronously with the same frequency. Alternatively, the motor 3 is provided as a biaxial motor in the prior art, and both ends are provided with an extension shaft for transmitting power, which can connect two vibration assemblies in one-to-one correspondence. With this arrangement, the two groups of vibration assemblies can significantly enhance the emitted vibration intensity, and the two groups of vibration assemblies are symmetrically provided on both sides of the motor 3, so that the whole vibration motor has stable transmission, good vibration uniformity, regularity and super stability, and can provide continuous comfortable vibration feeling. Of course, after the vibration motor is electrically connected with the frequency modulator or the controller, the vibration frequency and the vibration intensity can be changed to meet the needs of different experiencers and different application scenarios.

The housing 10 may be consisted of an upper housing 1 and a lower housing 2 which are connected with each other in a snap-fit manner. The upper housing 1 and the lower housing 2 are both provided with snap-fit flanges 12. The two snap-fit flanges 12 are aligned and can be connected by fasteners such as bolts. The housing 10 may also be provided with an access opening for the motor 3 to enter and exit, and a cover 13 for covering the access opening. The cover 13 is openably connected with the housing 10. Through the access opening, the components inside the housing 10 can be inspected without disassembling the upper housing 1 and the lower housing 2. The motor chamber may be provided with a supporting rib 23 protruding from the inner wall, and the motor 3 is erected in the housing 10 through the supporting rib 23, so that the motor 3 does not directly contact with the inner wall of the housing 10, forming a certain gap for gas to flow, which is beneficial to heat dissipation and has a good heat dissipation effect. Heat dissipation holes 11 may also be formed in the housing 10 to further enhance the heat dissipation effect.

In the rotating shaft chamber, a side plate may be provided in the width direction of the housing 10. The side plate is provided with a bearing groove 21, and the bearing 6 is connected in the bearing groove 21. As shown in FIG. 1, two bearings 6 can be sleeved on one rotating shaft 4 to transmit vibration more effectively. In the preferred scheme, the ratio of the distance between the two bearings 6 to the size of the motor 3 in the same direction is not less than one half, otherwise the vibration intensity will be easily affected. The specific size of the ratio can be set according to the requirements or application scenarios. Preferably, the distance between the two bearings 6 is basically equal to or the same as the size of the motor 3 in the same direction, so that the length of the motor 3 is almost the same as that of the rotating shaft 4, so that the left half and the right half of the housing 10 bear more uniform force and produce a better vibration effect as a whole.

In this embodiment, the eccentric block 5 and the rotating shaft 4 are connected, which can be detachably connected. Thus, the eccentric block 5 and the rotating shaft 4 have a split structure, which can be separated and connected. Both components can be replaced independently in case of wear or failure.

The eccentric block 5 can be provided with a cambered fitting groove 51 matched with the outer shaft wall of the rotating shaft 4, and at least a part of the rotating shaft 4 is embedded in the fitting groove 51, so that the eccentric block 5 and the rotating shaft 4 can be closely fitted to ensure the high efficiency and stability of transmission.

In one embodiment, the eccentric block 5 may be in a long block shape. As shown in FIG. 1, the length direction of the eccentric block 5 is provided in the same direction as the axial direction of the rotating shaft 4, and the cross section of the eccentric block 5 may be fan-shaped in the radial direction. Thus, the eccentric block 5 is a fan-shaped long column block, so that the effect of the generated centrifugal force on the rotating shaft 4 in the radial direction can be changed gently on one hand, and on the other hand, the rotating shaft 4 is uniformly stressed at various positions in the length direction, so that the overall vibration of the housing 10 is more uniform and the effect is better.

The eccentric block 5 can be directly fastened and connected with the rotating shaft 4 through fasteners. Alternatively, the rotating shaft 4 is sleeved with a fixed disk 7, and the end of the eccentric block 5 in the length direction is detachably connected with the fixed disk 7. The fixed disk 7 and the eccentric block 5 can be connected by fastening screws or bolts. There may also be two fixed disks 7 located at both ends of the eccentric block 5, respectively. The two fixed disks 7 are fastened and connected with both ends of the eccentric block 5, respectively, thus playing a stable connection role and a clamping role on the eccentric block 5, ensuring the connection stability between the eccentric block 5 and the rotating shaft 4, ensuring smooth transmission, reducing transmission loss, and bringing comfortable vibration feeling to the experiencer. To ensure the vibration intensity, the ratio of the length of the eccentric block 5 to the distance between the two bearings 6 is not less than one third. The closer the length of the eccentric block 5 is to the distance between the two bearings 6, the more uniform the stress of the rotating shaft 4 in the length direction, and the better the vibration effect of the housing 10.

As shown in FIG. 2, in another embodiment, the eccentric block 5 can also be a cylinder, which is eccentrically sleeved on the rotating shaft 4 to form an eccentric wheel, that is, the central axis of the eccentric block 5 is parallel to and spaced apart from the central axis of the rotating shaft 4. The eccentric block 5 of the cylinder can be connected with the rotating shaft 4 through fasteners, or can have an integrated structure. With the eccentric wheel structure, the vibration is relatively stable, and it is not easy to be disturbed to produce vibration with undesired amplitude or frequency.

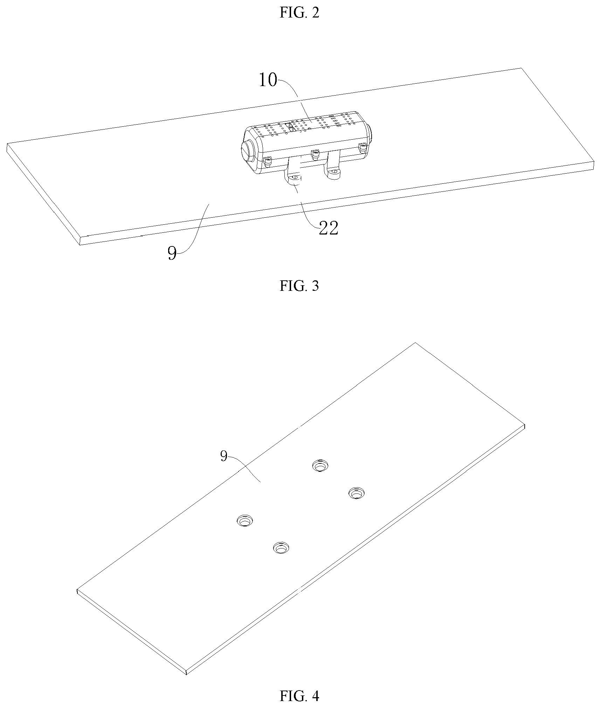

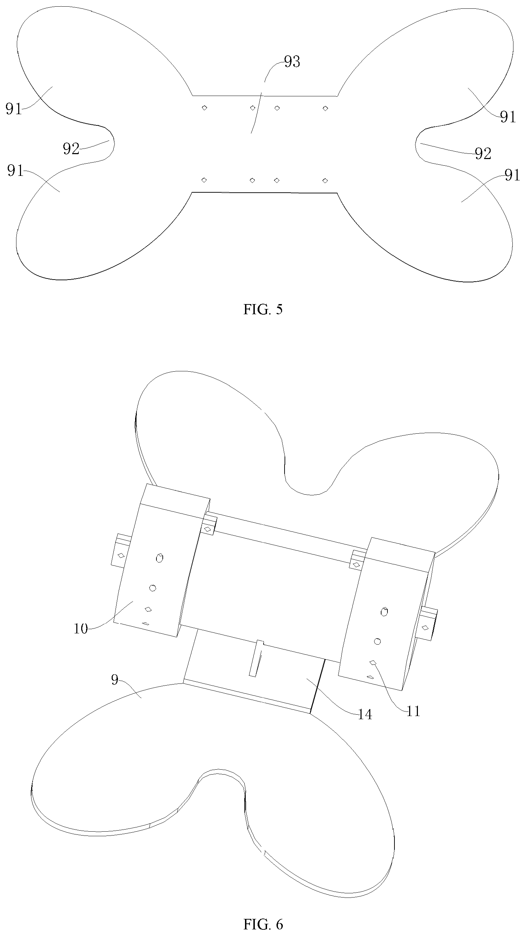

As shown in FIG. 3 and FIG. 6, this embodiment further provides a rhythm device, which comprises a vibrating plate 9 and a vibration motor as described in any one embodiment, wherein the vibrating plate 9 is connected with the vibration motor, and the vibrating plate 9 can emit stable, regular and strong vibration driven by the vibration motor. Then, the rhythmic device provided in this embodiment can output stable and regular vibration with guaranteed intensity, which improves the vibration stability and the vibration effect. When the vibrating plate 9 of the rhythmic device is combined with a mattress, sofa or deck chair, large-area stable, regular and strong vibration can be provided, a good massage effect is produced, human fatigue is relieved, human sub-health is improved or people are promoted to quickly enter deep sleep, sleep quality is enhanced, which really plays a healthy role. Moreover, the vibration motor is simpler in structure and easier to produce. The derivation process of this beneficial effect is basically consistent with the derivation process of the beneficial effect brought by the vibration motor described above, which will not be described in detail here.

In an example not according to the invention the vibrating plate 9 may be a rectangular plate, as shown in FIG. 4, or may be a plate of other shapes. When the length of the vibrating plate 9 is long, the vibration motor can be provided at the center of the vibrating plate 9, and both sides of the vibrating plate 9 are symmetrically provided relative to the vibration motor. According to the invention, as shown in FIG. 5, the vibrating plate 9 can be provided as follows. In the length direction, the vibrating plate 9 comprises a middle connecting section 93 and fin 91 sections located at both ends. The connecting section 93 connects two fin 91 sections and has a width smaller than that of the two fin 91 sections. The whole vibrating plate 9 has a symmetrical unfolded double-wing shape. Meanwhile, the vibration motor is connected to the connecting section 93, which can be located at the center of the vibrating plate 9 in the length direction. The axial direction of the rotating shaft 4 of the vibration motor is consistent with the direction of the vibrating plate 9. With this arrangement, the fin 91 sections at both ends of the vibrating plate 9 are heavier than the connecting section 93 in the middle. At the same time, the axial direction of the rotating shaft 4 is consistent with the width direction. When the rotating shaft 4 rotates with the eccentric block 5, the vibrating plate 9 will not only vibrate but also swing regularly with the rotating shaft 4 as the center under the action of the centrifugal force. The two fin 91 sections alternately descend and rise, the generated displacement increases, and the vibrating plate 9 vibrates swingably, which significantly enhances the vibration feeling. Because the vibration motor is stable in transmission, stable and synchronous in vibration transmission, uniform in vibration effect, stable in vibration directionality and periodicity, and good in massage effect on human body. The vibration effect can go deep into the inner layer of the body, promote the blood circulation of the body, assist in the treatment of patients who have been bedridden for a long time, improve the sleep quality of patients with sleep disorders, effectively supplement amount of exercise for some people who are under great work pressure and lack of exercise, improve their physical functions and improve the sub-health of the human body.

Each fin 91 section may be provided with a fan-shaped fin 91 or two fins 91 which are oblong and arranged in the width direction. As shown in FIG. 5, the vibrating plate 9 is provided in this shape, which is more convenient to generate oscillating vibration under the action of centrifugal vibration. The vibrating plate 9 may be cut and molded from a sheet material or directly molded by injection molding.

The two fins 91 located in the same fin 91 section are symmetrical in the length direction. The two fins 91 have an integrated structure, and the transition therebetween is in the shape of a U-shaped groove 92. Therefore, when vibrating, the transition is not easy to crack, and the service life is prolonged.

The vibrating plate 9 may be provided as a fiberboard. The fiberboard has good toughness, long service life and good vibration effect. The vibration motor may be a brushless motor. The brushless motor has high running efficiency and high rotating speed precision.

The connection between the vibrating plate 9 and the vibration motor can be as shown in FIGS. 1 and 3. The outer wall of the housing 10 is provided with a supporting leg 22. The supporting leg 22 comprises a connecting rod part 221 and a foot pad part 222. The foot pad part 222 is located at the bottom of the connecting rod part 221 and protrudes outward in the radial direction of the connecting rod part 221. The foot pad 222 and the vibrating plate 9 are both provided with fixing holes and are connected by bolts or screws.

Alternatively, as shown in FIG. 6, a plate-shaped connecting plate 14 is provided on the outer wall of the housing 10, and the vibrating plate 9 and the connecting plate 14 can be attached and connected. The connecting plate 14 and the housing 10 may have an integrated structure and may be integrally molded by injection molding. Specifically, the housing 10 comprises an upper housing 1 and a lower housing 2, which are connected by bolts. A half connecting plate 14 is integrally provided on the upper housing 1, and a half connecting plate 14 is integrally provided on the lower housing 2. When the upper housing 1 and the lower housing 2 are combined together, the two half connecting plates 14 form the whole connecting plate 14. The vibrating plate 9 can be connected to the connecting plate 14 by bolts. Alternatively, the connecting plate 14 and the vibrating plate 9 may be provided with a clamping block and a clamping groove, respectively, which are connected by a clamping structure.

The rhythm device further comprises a controller electrically connected with the motor 3. The controller can control parameters such as the rotation frequency of the motor 3. The controller is provided with a wireless communication module for communication connection with the mobile terminal. In this way, the vibration motor can be regulated and controlled through the mobile terminal, which is convenient for the user to adjust parameters such as vibration duration, vibration intensity and vibration frequency. The wireless communication module can be provided as a Bluetooth module, a WIFI module, a Zigbee module, etc. The mobile terminal can be a mobile phone with an APP or a remote controller.

This embodiment further provides a rhythmic mattress, which is provided with a mattress body and the rhythmic device described above. The vibrating plate 9 of the rhythmic device is connected with the mattress body. With this arrangement, the rhythmic mattress provided in this embodiment can generate stable and regular vibration with guaranteed intensity, which improves the vibration stability and the vibration effect, provides healthy massage for users, produces a good massage effect, relieves human fatigue, improves human sub-health or promotes people to quickly enter deep sleep, and really plays a healthy role. Moreover, the vibration motor is simpler in structure and easier to produce. The derivation process of this beneficial effect is basically consistent with the derivation process of the beneficial effect brought by the vibration motor described above, which will not be described in detail here.

The mattress body is provided with a waist area corresponding to the waist of the human body and a leg area corresponding to the lower leg of the human body. At least one rhythm device is provided in the waist area and the leg area, respectively. With this arrangement, the vibration sources are correspondingly provided in the two areas where fatigue and pain are most likely to occur. The waist and legs are mainly massaged strongly, while other areas are massaged with less intensity, which is more in line with the actual needs and enhances the use comfort.

This embodiment further provides a rhythmic sofa, which is provided with a sofa mattress and the rhythmic device described in the above embodiment. The vibrating plate of the rhythmic device is connected with the sofa mattress, so that the rhythmic sofa provided in this embodiment can generate stable and regular vibration with guaranteed intensity, which improves the vibration stability and the vibration effect, provides healthy massage for users, produces a good massage effect, relieves human fatigue, improves human sub-health or promotes human sleep, and really plays a healthy role. Moreover, the vibration motor is simpler in structure and easier to produce. The derivation process of this beneficial effect is basically consistent with the derivation process of the beneficial effect brought by the vibration motor described above, which will not be described in detail here.

This embodiment further provides a rhythmic deck chair, which is provided with a chair cushion and the rhythmic device described in the above embodiment. The vibrating plate of the rhythmic device is connected with the chair cushion, so that the rhythmic deck chair provided in this embodiment can generate stable and regular vibration with guaranteed intensity, which improves the vibration stability and the vibration effect, provides healthy massage for users, produces a good massage effect, relieves human fatigue, improves human sub-health or promotes human sleep, and really plays a healthy role. Moreover, the vibration motor is simpler in structure and easier to produce. The derivation process of this beneficial effect is basically consistent with the derivation process of the beneficial effect brought by the vibration motor described above, which will not be described in detail here.

It should be noted that "horizontal", "vertical", "upper", "lower", "left", "right", "front" and "rear" as described in the present disclosure refer to the direction when the vibration motor or the rhythm device is in a natural placement state as shown in the attached drawings.

It can be understood that the same or similar parts in the above embodiments can be referred to each other, and the contents not described in detail in some embodiments can refer to the same or similar contents in other embodiments. The multiple schemes provided by the present disclosure comprise their own basic schemes, which are independent of each other and do not restrict each other, but they can also be combined with each other without conflict, so as to achieve the common realization of multiple effects.

The above description of the disclosed embodiments enables those skilled in the art to make or use the present disclosure. Many modifications to these embodiments will be apparent to those skilled in the art, and the general principles defined herein can be implemented in other embodiments without departing from the spirit or scope of the present disclosure. Therefore, the present disclosure should not be limited to the embodiments shown herein, but should conform to the widest scope consistent with the scope of the apended claims.

## Claims

1. A rhythm device for massaging the user of a matress, sofa or chair, the rhythm device comprising a vibrating plate (9) and a vibration motor, the vibration motor comprising a housing (10), a motor (3) provided in the housing (10), a coupler (8) and a vibration assembly, wherein the vibration assembly comprises a rotating shaft (4) and an eccentric block (5) connected with the rotating shaft (4) and eccentrically provided, the rotating shaft (4) and the power output shaft of the motor (3) are coaxially provided and are in transmission connection through a coupler (8); a bearing (6) is fixed on the inner wall of the housing (10), the rotating shaft (4) penetrates into the bearing (6) and is rotatably connected with the bearing (6), and the motor (3) is fixedly provided with the inner wall of the housing (10);
wherein the eccentric block (5) is provided with a fitting groove (51) matched with the outer shaft wall of the rotating shaft (4), and the rotating shaft (4) is at least partially embedded in the fitting groove (51);
wherein the eccentric block (5) is in a long block shape, the length direction of the eccentric block is provided in the same direction as the axial direction of the rotating shaft (4), a fixed disk (7) is sleeved on the rotating shaft (4), and the end of the eccentric block (5) in the length direction is detachably connected with the fixed disk (7);
wherein the vibrating plate (9) is connected with the vibration motor;
**characterized in that** in the length direction, the vibrating plate (9) comprises a middle connecting section (93) and fin (91) sections located at both ends, the connecting section (93) connects two fin (91) sections and has a width smaller than that of the two fin (91) sections, the vibration motor is provided on the connecting section (93), and the axial direction of the rotating shaft (4) is consistent with the width direction of the vibrating plate (9).

2. The rhythm device according to claim 1, wherein each fin (91) section is provided with two connected fins (91); the vibrating plate (9) is provided as a fiberboard; and the motor (3) is provided as a brushless motor.

3. The rhythm device according to claim 1, wherein a connecting plate (14) is provided on the outer wall of the housing (10), and the vibrating plate (9) is attached and connected with the connecting plate (14);
alternatively,
a supporting leg (22) is provided on the housing (10), the supporting leg (22) comprises a connecting rod part (221) and a foot pad part (222) protruding in the radial direction of the connecting rod part (221), and the foot pad part (222) and the vibrating plate (9) are both provided with fixing holes and fixedly connected by bolts.

4. The rhythm device according to claim 1, further comprising a controller electrically connected with the motor (3), and a wireless communication module for communication and connection with a mobile terminal is provided on the controller.

5. A rhythmic mattress, wherein the rhythmic mattress is provided with a mattress body and the rhythmic device according to any one of claims 1-4, and the vibrating plate (9) of the rhythmic device is connected with the mattress body.

6. The rhythmic mattress according to claim 5, wherein a waist massage area corresponding to the waist of the human body and a leg massage area corresponding to the lower leg of the human body are provided on the mattress body, and at least one of the rhythmic devices is provided in the waist massage area and the leg massage area, respectively.

7. A rhythmic sofa, wherein the rhythmic sofa is provided with a sofa mattress and the rhythmic device according to any one of claims 1-4, and a vibrating plate of the rhythmic device is connected with the sofa mattress.

8. A rhythmic deck chair, wherein the rhythmic deck chair is provided with a chair cushion and the rhythmic device according to any one of claims 1-4, and a vibrating plate of the rhythmic device is connected with the chair cushion.

## Patentansprüche

1. Rhythmusvorrichtung zum Massieren des Benutzers einer Matratze, eines Sofas oder eines Stuhls, wobei die Rhythmusvorrichtung eine Vibrationsplatte (9) und einen Vibrationsmotor umfasst, wobei der Vibrationsmotor ein Gehäuse (10), einen in dem Gehäuse (10) angeordneten Motor (3), einen Kuppler (8) und eine Vibrationsbaugruppe umfasst, wobei die Vibrationsbaugruppe eine Rotationswelle (4) und einen mit der Rotationswelle (4) verbundenen und exzentrisch angeordneten Exzenterblock (5) umfasst, wobei die Rotationswelle (4) und die Kraftabtriebswelle des Motors (3) koaxial angeordnet sind und über einen Kuppler (8) in Verbindung stehen; wobei ein Lager (6) an der Innenwand des Gehäuses (10) befestigt ist, wobei die Rotationswelle (4) das Lager (6) durchdringt und mit dem Lager (6) drehbar verbunden ist, und wobei der Motor (3) fest an der Innenwand des Gehäuses (10) angebracht ist;
wobei der Exzenterblock (5) mit einer Passnut (51) versehen ist, deren Form der äußeren Wellenwand der Rotationswelle (4) entspricht, und wobei die Rotationswelle (4) zumindest teilweise in die Passnut (51) eingebettet ist;
wobei der Exzenterblock (5) in einer länglichen Blockform ausgebildet ist, wobei die Längsrichtung des Exzenterblocks in derselben Richtung wie die Axialrichtung der Rotationswelle (4) angeordnet ist, wobei eine Festplatte (7) auf die Rotationswelle (4) aufgelegt ist, und das Ende des Exzenterblocks (5) in Längsrichtung lösbar mit der Festplatte (7) verbunden ist;
wobei die Vibrationsplatte (9) mit dem Vibrationsmotor verbunden ist;
**dadurch gekennzeichnet, dass** die Vibrationsplatte (9) in Längsrichtung einen mittleren Verbindungsabschnitt (93) und an beiden Enden angeordnete Lamellenabschnitte (91) umfasst, wobei der Verbindungsabschnitt (93) die beiden Lamellenabschnitte (91) verbindet und eine Breite aufweist, die kleiner ist als die der beiden Lamellenabschnitte (91), wobei der Vibrationsmotor am Verbindungsabschnitt (93) vorgesehen ist und die Axialrichtung der Rotationswelle (4) mit der Breitenrichtung der Vibrationsplatte (9) übereinstimmt.

2. Rhythmusvorrichtung nach Anspruch 1, wobei jeder Lamellenabschnitt (91) mit zwei verbundenen Lamellen (91) versehen ist; wobei die Vibrationsplatte (9) als Faserplatte ausgeführt ist; und der Motor (3) als bürstenloser Motor ausgeführt ist.

3. Rhythmusvorrichtung nach Anspruch 1, wobei eine Verbindungsplatte (14) an der Außenwand des Gehäuses (10) vorgesehen ist und die Vibrationsplatte (9) an der Verbindungsplatte (14) befestigt und mit dieser verbunden ist;
optional,
dass ein Stützbein (22) am Gehäuse (10) vorgesehen ist, wobei das Stützbein (22) einen Verbindungsstangenteil (221) und einen Fußpolsterteil (222) umfasst, der in radialer Richtung des Verbindungsstangenteils (221) vorsteht, und wobei der Fußpolsterteil (222) und die Vibrationsplatte (9) beide mit Befestigungslöchern versehen und durch Bolzen fest miteinander verbunden sind.

4. Rhythmusvorrichtung nach Anspruch 1, die ferner eine elektrisch mit dem Motor (3) verbundene Steuereinheit umfasst, und wobei ein drahtloses Kommunikationsmodul zur Kommunikation und Verbindung mit einem mobilen Endgerät an der Steuereinheit vorgesehen ist.

5. Rhythmische Matratze, wobei die rhythmische Matratze mit einem Matratzenkörper und der Rhythmusvorrichtung nach einem der Ansprüche 1 bis 4 versehen ist und die Vibrationsplatte (9) der Rhythmusvorrichtung mit dem Matratzenkörper verbunden ist.

6. Rhythmische Matratze nach Anspruch 5, wobei eine Taillenmassagezone, die der Taille des menschlichen Körpers entspricht, und eine Beinmassagezone, die dem Unterschenkel des menschlichen Körpers entspricht, auf dem Matratzenkörper bereitgestellt sind, und wobei mindestens eines der Rhythmusvorrichtung jeweils in der Taillenmassagezone und der Beinmassagezone jeweils bereitgestellt ist.

7. Rhythmisches Sofa, wobei das rhythmische Sofa mit einer Sofamatratze und der Rhythmusvorrichtung nach einem der Ansprüche 1 bis 4 versehen ist und eine Vibrationsplatte der Rhythmusvorrichtung mit der Sofamatratze verbunden ist.

8. Rhythmischer Liegestuhl, wobei der rhythmische Liegestuhl mit einem Stuhlkissen und der Rhythmusvorrichtung nach einem der Ansprüche 1 bis 4 versehen ist und eine Vibrationsplatte der Rhythmusvorrichtung mit dem Stuhlkissen verbunden ist.

## Revendications

1. Dispositif rythmique pour masser l'utilisateur d'un matelas, d'un canapé ou d'une chaise, le dispositif rythmique comprenant une plaque vibrante (9) et un moteur vibrant, le moteur vibrant comprenant un boîtier (10), un moteur (3) prévu dans le boîtier (10), un coupleur (8) et un ensemble vibrant, l'ensemble vibrant comprenant un arbre rotatif (4) et un bloc excentrique (5) relié à l'arbre rotatif (4) et prévu de manière excentrique, l'arbre rotatif (4) et un arbre de sortie de puissance du moteur (3) étant prévus de manière coaxiale et en liaison de transmission par l'intermédiaire d'un coupleur (8) ; un palier (6) étant fixé sur une paroi interne du boîtier (10), l'arbre rotatif (4) pénétrant dans le palier (6) et étant relié de manière rotative au palier (6), et le moteur (3) étant fixé à la paroi interne du boîtier (10) ;
dans lequel le bloc excentrique (5) est pourvu d'une rainure d'ajustement (51) correspondant à une paroi externe de l'arbre rotatif (4), et l'arbre rotatif (4) est au moins partiellement encastré dans la rainure d'ajustement (51) ;
dans lequel le bloc excentrique (5) présente une forme de bloc long, une direction de la longueur du bloc excentrique est prévue dans la même direction que la direction axiale de l'arbre rotatif (4), un disque fixe (7) est manchonné sur l'arbre rotatif (4), et une extrémité du bloc excentrique (5) dans la direction de la longueur est reliée de manière amovible au disque fixe (7) ;
dans lequel la plaque vibrante (9) est reliée au moteur vibrant ;
**caractérisé en ce que**, dans la direction de la longueur, la plaque vibrante (9) comprend une section de liaison (93) médiane et des sections d'aileron (91) situées à deux extrémités, la section de liaison (93) relie deux sections d'aileron (91) et présente une largeur inférieure à celle des deux sections d'aileron (91) , le moteur vibrant est prévu sur la section de liaison (93), et une direction axiale de l'arbre rotatif (4) est cohérente avec la direction de la largeur de la plaque vibrante (9).

2. Dispositif rythmique selon la revendication 1, dans lequel chaque section d'aileron (91) est pourvue de deux ailerons reliés (91) ; la plaque vibrante (9) est prévue comme panneau de fibre ; et le moteur (3) est prévu comme moteur sans balais.

3. Dispositif rythmique selon la revendication 1, dans lequel une plaque de liaison (14) est prévue sur la paroi externe du boîtier (10), et la plaque vibrante (9) est attachée et reliée à la plaque de liaison (14) ;
alternativement,
un pied de support (22) est prévu sur le boîtier (10), le pied de support (22) comprend une portion de tige de liaison (221) et une portion d'appui-pied (222) faisant saillie dans une direction radiale de la portion de tige de liaison (221), et la portion d'appui-pied (222) et la plaque vibrante (9) sont toutes deux pourvues de trous de fixation et reliées de manière fixe par des boulons.

4. Dispositif rythmique selon la revendication 1, comprenant en outre un contrôleur connecté électriquement au moteur (3), et un module de communication sans fil pour une communication et une connexion avec un terminal mobile est prévu sur le contrôleur.

5. Matelas rythmique, dans lequel le matelas rythmique est pourvu d'un corps de matelas et du dispositif rythmique selon l'une quelconque des revendications 1 à 4, et la plaque vibrante (9) du dispositif rythmique est reliée au corps du matelas.

6. Matelas rythmique selon la revendication 5, dans lequel une zone de massage pour la taille correspondant à la taille du corps humain et une zone de massage pour les jambes correspondant au bas de la jambe du corps humain sont prévues sur le corps de matelas, et au moins un des dispositifs rythmiques est prévu dans la zone de massage pour la taille et la zone de massage pour les jambes, respectivement.

7. Canapé rythmique, dans lequel le canapé rythmique est pourvu d'un matelas de canapé et du dispositif rythmique selon l'une quelconque des revendications 1 à 4, et une plaque vibrante du dispositif rythmique est reliée au matelas de canapé.

8. Chaise longue rythmique, dans laquelle la chaise longue rythmique est pourvue d'un coussin de chaise et du dispositif rythmique selon l'une quelconque des revendications 1 à 4, et une plaque vibrante du dispositif rythmique est reliée au coussin de chaise.
